# EUROPÄISCHE PATENTANMELDUNG

(11) **EP 1 273 472 A1**
(43) Veröffentlichungstag der Anmeldung: **08.01.2003**
(21) Anmeldenummer: 02013608.1
(22) Anmeldetag: 19.06.2002
(51) Int. Cl.: B60J 10/10, B60J 7/12

(54) **Dichtungselement für ein bewegliches Fahrzeug-Bauteil**

(30) Priorität: 03.07.2001 DE 10131774
(71) Anmelder: CTS Fahrzeug-Dachsysteme GmbH, 21079 Hamburg (DE)
(72) Erfinder: Raisch, Dieter, Dipl-Ing., 71277 Rutesheim (DE); Kalb, Wilfried, Dipl.-Ing., 71229 Leonberg (DE)
(74) Vertreter: Müller, Gottfried

(57) **Zusammenfassung**

Ein Dichtungselement für ein bewegliches Fahrzeug-Bauteil umfasst einen Trägerkörper (4) und an jeder Stirnseite des Trägerkörpers (4) jeweils einen Dichtkörper (7,8). In den Trägerkörper (4) ist ein Filmscharnier (5) eingebracht.

## Beschreibung

Die Erfindung bezieht sich auf ein Dichtungselement für ein bewegliches Fahrzeug-Bauteil nach dem Oberbegriff des Anspruches 1.

In der Druckschrift DE 198 01 870 A1 wird ein Dichtungselement beschrieben, welches in einen Fensterrahmen einer verstellbaren Seitenscheibe in einem Kraftfahrzeug eingesetzt ist und in Schließstellung der Scheibe einen wasserdichten Abschluss gewährleisten soll. Das Dichtungselement besteht aus einer zweiteiligen Trägerschiene, die zwei einzelne Schienenelemente umfasst, welche im Bereich eines überlappenden Abschnittes gemeinsam an einem fahrzeugfesten Bauteil angenietet sind. Auf die freien Enden der beiden Schienenelemente ist jeweils ein Dichtkörper aufgespritzt, welche jeweils nach innen ragende Dichtlippen aufweisen, die einen Aufnahmeraum für die Oberkante der aufzunehmenden Scheibe begrenzen, wobei der Boden des Aufnahmeraumes von den beiden U-förmig zusammengesetzten Schienenelementen der Trägerschiene gebildet ist.

Die beiden Schienenelemente der Trägerschiene können vor der Befestigung am Fahrzeug relativ zueinander verschoben werden und müssen über den Niet fixiert werden, wodurch bei der Montage ein zusätzlicher Freiheitsgrad zu berücksichtigen ist, der entsprechend den konstruktiven Randbedingungen eingestellt werden muss. Dies verbessert zwar einerseits die Einsetzmöglichkeiten des Dichtungselementes, andererseits müssen zwei Einzeldichtungen zu einem gemeinsamen Dichtungselement zusammengesetzt werden, was sowohl den Fertigungsaufwand für die Herstellung des Dichtungselementes als auch den Montageaufwand erhöht.

Aus der Druckschrift DE 295 09 880 U1 ist ein Dichtungselement mit einem näherungsweise U-förmigen, einen Aufnahmeraum bildenden Trägerkörper bekannt, an dessen freien Stirnseiten jeweils ein Dichtkörper angeordnet ist. Die beiden Dichtkörper besitzen sich berührende Dichtlippen, die den Aufnahmeraum begrenzen. In den Aufnahmeraum ist eine Fahrzeugfensterscheibe einzuführen, wobei die Dichtlippen an gegenüberliegenden Scheibenseiten dichtend anliegen.

Die Einbausituation des Dichtungselements in die Fahrzeugkarosserie oder das Fahrzeugdach ist durch die Form des Trägerkörpers eingeschränkt. Verschiedene Einbausituationen erfordern unterschiedlich ausgeführte Dichtungselemente, wodurch der Aufwand für die Herstellung und Montage der Dichtungselemente im Fahrzeug hoch ist.

Der Erfindung liegt das Problem zugrunde, ein mit einem Trägerkörper verstärktes Dichtungselement zu schaffen, welches in Einbaulage einen Aufnahmeraum für die Aufnahme eines abzudichtenden Bauteiles begrenzt und einen verhältnismäßig geringen Fertigungs- und Montageaufwand erfordert.

Dieses Problem wird erfindungsgemäß mit den Merkmalen des Anspruches 1 gelöst. Die Unteransprüche geben zweckmäßige Weiterbildungen an.

Das Dichtungselement umfasst einen einzelnen, schienenartigen Trägerkörper, in welchen eine Sollschwachstelle eingebracht ist, die ein Filmscharnier bildet, das eine Relativschwenkbewegung zwischen zwei benachbarten Abschnitten des Trägerkörpers ermöglicht. Diese Ausführung bietet den Vorteil, dass zur Herstellung des Dichtungselementes beide stirnseitige Enden des schienenartigen Trägerkörpers mit jeweils einem Dichtkörper umspritzt werden können, was mit einem Arbeitsgang zu erledigen ist, da lediglich ein einziger Trägerkörper in zweckmäßig gestrecktem Zustand an unterschiedlichen Enden mit Dichtungsmaterial zu versehen ist. Beim Einbau des Dichtungselementes kann dagegen dieses um das Filmscharnier so weit gebogen bzw. verschwenkt werden, bis die beiden Trägerkörperabschnitte diesseits und jenseits des Filmscharniers einen gewünschten, der jeweiligen Einbausituation entsprechenden Relativwinkel bilden.

Die beiden Abschnitte des Trägerkörpers auf den unterschiedlichen Seiten des Filmscharniers definieren Wandungen des Aufnahmeraumes für das abzudichtende Bauteil. Die an beiden Enden des Trägerkörpers aufgespritzten Dichtkörper können hierbei in der Weise geformt sein, dass nach der Biegung des Trägerkörpers um das Filmscharnier beide Dichtkörper berührend aneinander liegen und hierdurch einen geschlossenen Aufnahmeraum begrenzen. Das abzudichtende Bauteil, beispielsweise eine Fensterscheibe im Fahrzeug, kann in Schließstellung zwischen die beiden zusammenwirkenden Dichtkörper eingeschoben werden.

In einer zweckmäßigen Weiterbildung ist der Trägerkörper dreiteilig mit einem mittleren sowie zwei seitlichen Abschnitten aufgebaut, wobei die beiden Dichtkörper auf die jeweiligen seitlichen Abschnitte aufgespritzt sind. Bei einem dreiteiligen Trägerkörper befindet sich das Filmscharnier vorteilhaft zwischen dem mittleren und einem der beiden seitlichen Abschnitte. Die Dreiteilung des Trägerkörpers bietet die Möglichkeit, den fest mit dem mittleren Abschnitt verbundenen seitlichen Abschnitt etwa rechtwinklig anzuordnen, so dass bei zugleich um 90° verschwenktem Filmscharnier der Trägerkörper eine U-förmige Gestalt einnimmt und dementsprechend einen U-förmigen Aufnahmeraum begrenzt.

Der Trägerkörper besteht zweckmäßig aus Kunststoff oder aus einem Blech bzw. aus einem Leichtmetall, beispielsweise Aluminium, wodurch dem Dichtungselement ein erhöhtes Maß an Stabilität verliehen wird. Die Ausführung als Blech bzw. Leichtmetall bietet zudem den Vorteil, dass bei einer Verschwenkung um das Filmscharnier auf Grund der Eigenelastizität des Trägerkörpers ein rückstellendes Moment in die Ausgangslage des Trägerkörpers besteht, welches bei einer Aufnahme des Dichtungselements in eine Ausnehmung in einem fahrzeugfesten Bauteil das Dichtungselement gegen die aufnehmenden Wandseiten beaufschlagt und dadurch dieses in der Ausnehmung festklemmt.

An jedem Dichtkörper an den gegenüberliegenden seitlichen Abschnitten des Trägerkörpers kann jeweils eine Dichtlippe angespritzt sein, zwischen die das abzudichtende Bauteil in Dichtstellung eingeschoben wird.

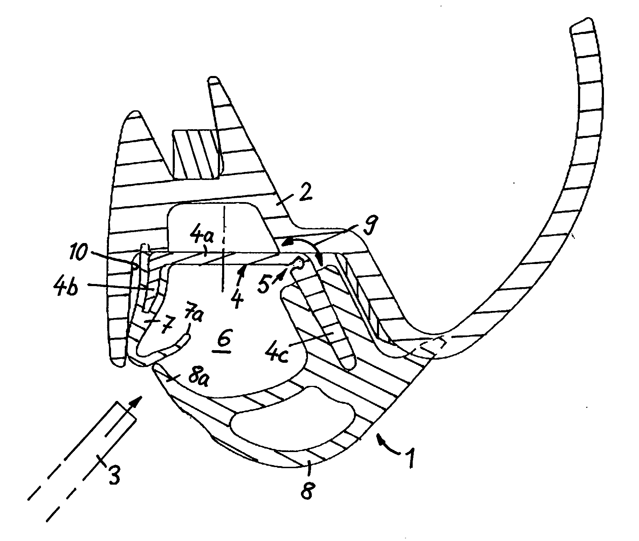

Weitere Vorteile und zweckmäßige Ausführungen sind den weiteren Ansprüchen, der Figurenbeschreibung und der Zeichnung zu entnehmen, in der ein Dichtungselement mit einem Trägerkörper und auf gegenüberliegenden Endabschnitten des Trägerkörpers aufgespritzten Dichtkörpern in der Einbaulage in einem Fahrzeug-Bauteil dargestellt ist.

Das Dichtungselement 1 ist an einem karosseriefesten Bauteil 2 gehalten, beispielsweise an einem Scheibenrahmen, und ist zur Aufnahme eines beweglichen Bauteiles, beispielsweise einer Scheibe 3 vorgesehen, die in Dichtstellung in einen Aufnahmeraum 6 im Dichtungselement 1 in der dargestellten Pfeilrichtung einzuschieben ist. Zur Überführung in die Dichtstellung wird die Scheibe 3 in Pfeilrichtung zwischen zwei aneinander grenzenden Dichtkörpern 7 und 8, die Bestandteil des Dichtungselementes 1 sind, in den Aufnahmeraum 6 eingeschoben.

Das Dichtungselement 1 umfasst einen schienenartigen Trägerkörper 4, welcher dreiteilig mit einem mittleren Abschnitt 4a und zwei seitlichen Abschnitten 4b und 4c aufgebaut ist. Auf die seitlichen Abschnitte 4b und 4c, insbesondere auf die Stirnseite der seitlichen Abschnitte, sind die Dichtkörper 7 und 8 aufgebracht, insbesondere aufgespritzt, die zweckmäßig aus einem Elastomer bestehen. Die Dichtkörper 7 und 8 weisen auf ihrer dem jeweiligen seitlichen Abschnitt 4b bzw. 4c des Trägerkörpers abgewandten Seite eine Dichtlippe 7a bzw. 8a auf, wobei die Dichtlippen in unbeaufschlagter Position des Dichtungselementes - ohne die Scheibe 3 - aneinander anliegen. Bei eingeschobener Scheibe 3 liegen die Dichtlippen 7a und 8a an den Seitenwänden der Scheibe an.

Zwischen dem mittleren Abschnitt 4a und dem seitlichen Abschnitt 4c des Trägerkörpers 4 befindet sich eine Sollschwachstelle, deren Querschnitt gegenüber den übrigen Bereichen des Trägerkörpers reduziert ist und die ein Filmscharnier 5 bildet, das eine Relativschwenkbewegung zwischen den benachbarten Abschnitten 4a und 4c um eine Achse senkrecht zur Längsachse des Trägerkörpers gemäß Pfeilrichtung 9 ermöglicht.

Zur Herstellung befindet sich der Trägerkörper 4 zweckmäßig in einer ausgestreckten Position, in welcher der mittlere Abschnitt 4a und der seitliche Abschnitt 4c eine gemeinsame Längsachse aufweisen. Beim Montieren und Einfügen in die Einbauposition kann das Filmscharnier 5 der jeweiligen Einbausituation entsprechend um seine Scharnierachse verschwenkt werden.

Im Ausführungsbeispiel ist das Dichtungselement 1 in eine Ausnehmung 10 im fahrzeugfesten Bauteil 2 eingesetzt, wobei der Schwenkwinkel des Filmscharniers 5 sich entsprechend den Innenwandungen der Ausnehmung 10 anpasst. Da in Einbaulage sowohl der seitliche Abschnitt 4c, welcher über das Filmscharnier 5 vom mittleren Abschnitt 4a separiert ist, als auch der gegenüberliegende seitliche Abschnitt 4b sich winklig zum mittleren Abschnitt erhebt, insbesondere näherungsweise vertikal hierzu verläuft, weist der Trägerkörper 4 insgesamt eine etwa U-förmige Gestalt auf.

## Patentansprüche

1. Dichtungselement für ein bewegliches Fahrzeug-Bauteil, umfassend einen Trägerkörper (4) und jeweils einen Dichtkörper (7, 8) an beiden Stirnseiten des Trägerkörpers (4),
**dadurch gekennzeichnet,**
**dass** der Trägerkörper (4) ein den Trägerkörper in mindestens zwei Abschnitte (4a, 4c) unterteilendes Filmscharnier (5) aufweist.

2. Dichtungselement nach Anspruch 1,
**dadurch gekennzeichnet,**
**dass** der Trägerkörper (4) dreiteilig mit einem mittleren Abschnitt (4a) und zwei seitlichen Abschnitten (4b, 4c), auf die die Dichtkörper (7, 8) aufgespritzt sind, aufgebaut ist.

3. Dichtungselement nach Anspruch 2,
**dadurch gekennzeichnet,**
**dass** das Filmscharnier (5) zwischen dem mittleren Abschnitt (4a) und einem seitlichen Abschnitt (4c) angeordnet ist.

4. Dichtungselement nach Anspruch 2 oder 3,
**dadurch gekennzeichnet,**
**dass** ein seitlicher Abschnitt (4b) des Trägerkörpers (4) sich näherungsweise vertikal zum mittleren Abschnitt (4a) erstreckt.

5. Dichtungselement nach einem der Ansprüche 1 bis 4,
**dadurch gekennzeichnet,**
**dass** die Dichtkörper (7, 8) in Einbaulage des Dichtungselements (1) einen Aufnahmeraum (6) begrenzen.

6. Dichtungselement nach Anspruch 5,
**dadurch gekennzeichnet,**
**dass** an jedem Dichtkörper (7, 8) eine Dichtlippe (7a, 8a) angespritzt ist.

7. Dichtungselement nach einem der Ansprüche 1 bis 6,
**dadurch gekennzeichnet,**
**dass** der Trägerkörper (4) aus Kunststoff besteht.

8. Dichtungselement nach einem der Ansprüche 1 bis 6,
**dadurch gekennzeichnet,**
**dass** der Trägerkörper (4) aus Blech besteht.
